**Europäisches Patentamt**

**European Patent Office**

**Office européen des brevets**

(19)

(11) Numéro de publication : **0 366 773 B1**

(12)

# FASCICULE DE BREVET EUROPEEN

(45) Date de publication du fascicule du brevet :
**17.06.92 Bulletin 92/25**

(51) Int. Cl.$^5$ : **B29D 30/38,** B29C 47/32, B29C 47/02, B05C 9/04

(21) Numéro de dépôt : **89905707.9**

(22) Date de dépôt : **28.04.89**

(86) Numéro de dépôt international :
**PCT/FR89/00206**

(87) Numéro de publication internationale :
**WO 89/10834 16.11.89 Gazette 89/27**

(54) **PROCEDE ET APPAREIL POUR ENDUIRE DE CAOUTCHOUC DES FILS DEROULES EN PARALLELE ET PRODUIRE AINSI UNE NAPPE.**

(30) Priorité : **06.05.88 FR 8806258**

(43) Date de publication de la demande :
**09.05.90 Bulletin 90/19**

(45) Mention de la délivrance du brevet :
**17.06.92 Bulletin 92/25**

(84) Etats contractants désignés :
**AT BE CH DE FR GB IT LI LU NL SE**

(56) Documents cités :
**EP-A- 0 060 500**
**EP-A- 0 109 222**
**EP-A- 0 281 882**
**DE-A- 3 602 350**
**DE-B- 2 906 109**
**FR-A- 2 126 106**
**FR-A- 2 129 742**
**FR-A- 2 137 850**
**FR-A- 2 187 537**
**FR-A- 2 207 020**

(56) Documents cités :
**FR-A- 2 566 699**
**GB-A- 1 144 863**
**GB-A- 1 603 813**
**US-A- 2 512 762**
**US-A- 3 957 940**
**US-A- 4 428 896**

(73) Titulaire : **COMPAGNIE GENERALE DES ETABLISSEMENTS MICHELIN-MICHELIN & CIE**
**4, rue du Terrail**
**F-63000 Clermont-Ferrand (FR)**

(72) Inventeur : **AUCLAIR, Jacques**
**8, impasse François-Schoubert**
**F-63800 Cournon (FR)**
Inventeur : **BARDY, Daniel**
**6, rue de la Camargue**
**F-63100 Clermont-Ferrand (FR)**

(74) Mandataire : **Bauvir, Jacques et al**
**Michelin & Cie Service K. Brevets**
**F-63040 Clermont-Ferrand Cédex (FR)**

EP 0 366 773 B1

Jouve, 18, rue Saint-Denis, 75001 PARIS

**Description**

La présente invention concerne l'enduction de fils déroulés en parallèle avec du caoutchouc ou bien avec une matière d'enduction analogue, pour obtenir des nappes de câblés utilisés pour renforcer des articles en caoutchouc ou en élastomère, par exemple des pneumatiques.

Par le brevet US 2 512 762, on connaît un tel appareil pour fabriquer des nappes de câbles métalliques. On y voit quatre rouleaux disposés en parallèle. Deux feuilles minces de caoutchouc sont fabriquées chacune à partir d'un bourrelet de caoutchouc formé entre deux rouleaux tournant en sens contraires. Les fils déroulés en parallèle sont insérés entre les deux feuilles de caoutchouc, l'ensemble étant pressé entre deux rouleaux pour former une nappe. Ce principe de fabrication est largement utilisé dans l'industrie du caoutchouc. Malheureusement, les vitesses de fabrication qu'il permet d'atteindre s'avèrent à l'heure actuelle insuffisantes. De plus, une telle machine n'est pas du tout adaptée à la production des nappes comportant un petit nombre de fils parallèles, comme par exemple certains renforcements à 0° assurant un frettage au niveau des épaules des pneumatiques.

Le brevet FR 2 207 020 propose une machine d'enduction de fils dans laquelle la matière d'enduction est confinée entre un rouleau et une filière profilée immobile. L'une des faces de la chambre d'imprégnation étant immobile, le débit de matière d'imprégnation s'en trouve freiné et là encore il est difficile d'atteindre des vitesses de fabrication élevées. En outre, l'enduction ne se produit pas de façon égale de part et d'autre des fils.

La présente invention vise à permettre la réalisation économique de nappes de fils parallèles recouverts de caoutchouc, particulièrement utile dans le cas de nappes étroites, c'est-à-dire présentant un petit nombre de fils parallèles.

Un objectif de la présente invention est de proposer un outillage aussi simple et compact que possible, afin d'être adapté à la réalisation d'unités de production peu encombrantes, et à grand débit.

Selon l'invention, le procédé d'enduction par du caoutchouc d'un ensemble de fils déroulés simultanément et en parallèle, dans lequel l'enduction sur la première face dudit ensemble est effectuée en appuyant ledit ensemble de fils sur un rouleau en rotation, avec interposition de caoutchouc est caractérisé en ce que l'on guide ensuite ledit ensemble pour le déplacer axialement par rapport à la position d'enduction de la première face et on l'amène en appui sur le même rouleau pour un second passage permettant d'enduire la seconde face.

L'invention prévoit également un appareil d'enduction d'un ensemble de fils, comportant un cylindre autour duquel sont enroulés partiellement lesdits fils, ledit cylindre étant mis en rotation pour provoquer l'avance desdits fils, ledit cylindre coopérant avec un rouleau pour imprégner lesdits fils avec du caoutchouc interposé entre le rouleau et les fils, ledit rouleau étant en rotation inverse par rapport audit cylindre, caractérisé en ce qu'il comporte au moins un galet disposé et orienté pour assurer la reprise de l'ensemble de fils enduits sur une face, le déplacement de ceux-ci axialement par rapport à la position d'enduction de la première face sur le rouleau, et le guidage de ceux-ci pour les amener une seconde fois en coopération avec ledit rouleau, pour une enduction de la seconde face effectuée axialement à côté de la position d'enduction de la première face.

Les figures suivantes illustrent l'invention par plusieurs variantes de mise en oeuvre permettant d'en comprendre toutes les facettes.

Les figures 1 à 4 illustrent une première variante d'exécution de l'invention,

La figure 1 est une vue en perspective des principaux organe de la machine,

La figure 2 est une vue en élévation,

La figure 3 est une vue suivant III à la figure 2,

La figure 4 est une vue suivant IV à la figure 2,

Les figures 5 à 7 illustrent une seconde variante d'exécution de l'invention,

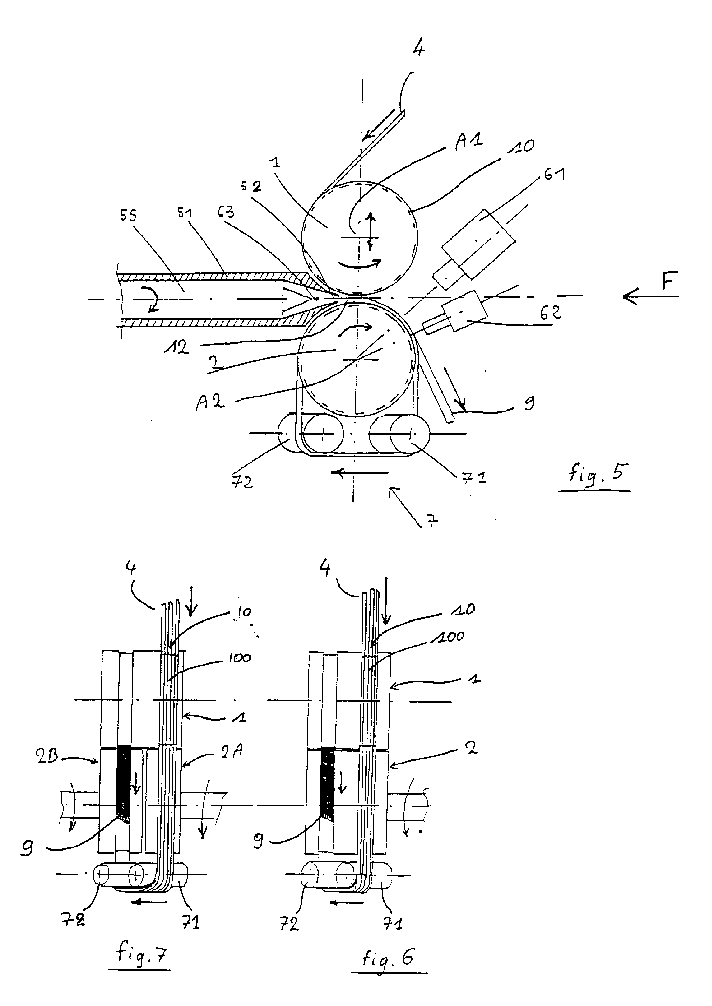

La figure 5 est une vue en élévation,

La figure 6 est une vue suivant F à la figure 5,

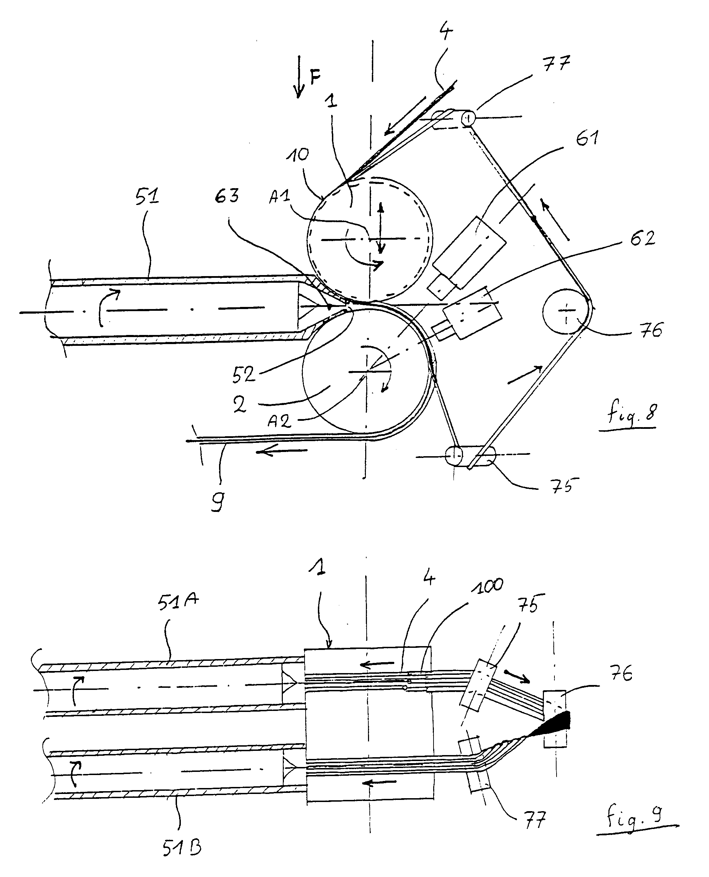

La figure 7 est une vue suivant F à la figure 5, incorporant une modification, ,

Les figures 8 et 9 illustrent une troisième variante de réalisation,

La figure 9 étant une vue suivant F à la figure 8.

L'invention porte tout particulièrement sur le principe et les moyens de manipulation et de guidage des fils pour effectuer l'enduction sur deux faces, au moyen du même rouleau, par deux passages successifs à des positions axialement décalées contre la surface dudit rouleau.

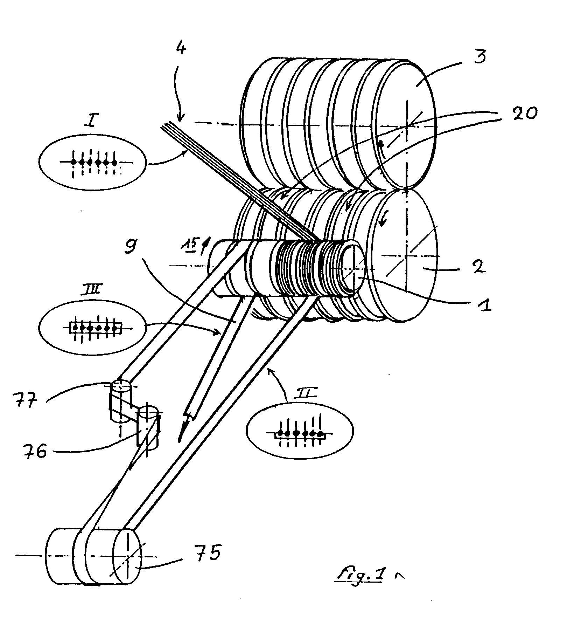

A la figure 1, on aperçoit un appareil d'enduction d'un ensemble de fils 4, pour former une nappe 9, dans laquelle les fils sont revêtus sur les deux faces de caoutchouc dit "de calandrage" constituant la matière d'imprégnation par des moyens usuels non représentés. Les stades successifs d'élaboration de la nappe 9 sont montrés agrandis dans les cercles I, II et III. Les fils 4 sont déroulés hors des bobines individuelles de fils, ou bien constituent déjà une nappe comportant des fils de trame, par des moyens usuels non représentés. Après enduction, la nappe 9 est réenroulée, ou bien elle rejoint un organe de pose sur un poste de fabrication de pneumatique par exemple via un système compensateur de longueur.

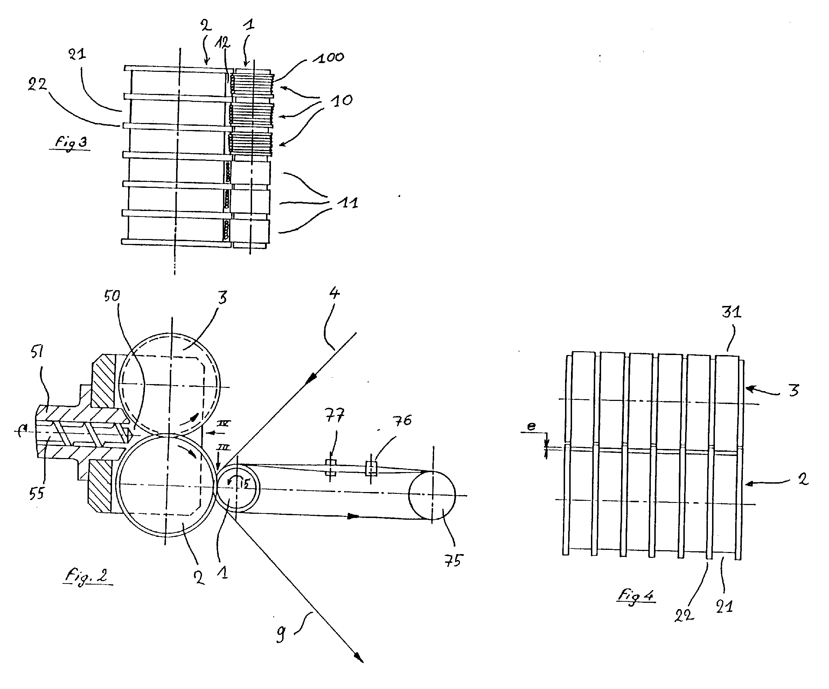

A la figure 1, on a illustré la fabrication d'une seule bandelette pour bien faire apparaître le procédé de fabrication. Il va de soi que l'on peut enduire un nombre quelconque de fils pour produire une seule nappe ou, en particulier, pour en produire plusieurs simultanément. On peut procéder par refendage, ou mieux, on peut réaliser des bandelletes séparées de caoutchouc d'enduction comme cela apparaîtra mieux ci-dessous (illustration aux figures 2 à 4).

Aux figures 1 à 4, on voit un cylindre 1, autour duquel les fils 4 sont partiellement enroulés. Le cylindre 1 est creusé de petites stries 100 afin d'assurer un guidage parfait des fils 4. Il est en rotation dans le sens indiqué par la flèche 15, et au moins en position de fonctionnement de l'appareil, il est disposé de façon à appuyer les fils 4 sur le rouleau 2, avec interposition du caoutchouc de calandrage entre les fils 4 et le rouleau 2. Celui-ci est donc en rotation inverse et coordonnée par rapport au cylindre 1 et le caoutchouc de calandrage est disposé à la surface du rouleau 2 sous forme de bandelette 20. Les fils 4, revêtus sur une face par le caoutchouc (stade II à la figure 1) maintiennent leur prise avec le cylindre 1 puis sont repris par un galet 75, positionné par rapport au rouleau 2 sensiblement dans le prolongement radial de la position du cylindre 1, et enfin reviennent sur ledit cylindre 1, à une position axialement décalée, la face déjà revêtue étant en contact avec ledit cylindre 1. Une seconde bandelette 20 est disposée sur le rouleau 2 en correspondance avec le second passage de l'ensemble de fils 4. Entre les deux passages de l'ensemble des fils 4 sur le cylindre 1, ledit ensemble doit être retourné sur lui-même. Deux petits galets supplémentaires 76 et 77 sont disposés et portent ledit ensemble de façon à décaler axialement l'ensemble de fils 4 de la distance voulue, et en permettre le retournement.

Le mode d'obtention des bandelettes 20 de caoutchouc est décrit plus particulièrement en relation avec les figures 2, 3 et 4.

Le rouleau 2 comporte des gorges 21 correspondant chacune à une bandelette 20. Un second rouleau 3 comportant des bossages 31 correspondant aux gorges 21 est disposé parallèlement au premier de façon à laisser entre ceux-ci un intervalle "e" correspondant à l'épaisseur des bandelettes. Les deux rouleaux 2 et 3 tournent en sens inverse l'un de l'autre et le caoutchouc d'enduction est accumulé sous pression dans la chambre 50 entre lesdits rouleaux 2 et 3 du côté amont par rapport au sens de rotation des rouleaux. Le caoutchouc est délivré par une boudineuse 51 dont la vis 55 est animée d'un mouvement de rotation régulé en fonction de la pression du caoutchouc dans la chambre 50. Les bossages 31 du rouleau 3 sont engagés dans les gorges 21 du rouleau 2. De la sorte, on isole les bandelettes 20 de caoutchouc l'une par rapport aux autres sans qu'il soit besoin de couteaux de refendage. Le petit cordon de caoutchouc présent au sommet de chaque flasque 22 séparant deux gorges 21 sur le rouleau 2 est recyclé au fur et à mesure lorsqu'il revient dans la chambre 50 dans laquelle le caoutchouc de calandrage est accumulé.

Ainsi, on délimite sur le rouleau 2 une série de bandelettes 20 séparées les unes des autres. Afin de parvenir à appuyer l'ensemble ou les ensembles de fils 4 sur le rouleau 2, le cylindre 1 est lui aussi pourvu de bossages 10 et 11, correspondant aux gorges 21 du rouleau 2, au fond desquelles se trouve les bandelettes 20 du caoutchouc.

Les bossages 10 sont creusés de petites stries 100, dont le rôle a été expliqué ci-dessus, et les bossages 11 sont lisses. Les bossages 10 portent donc les fils 4 pour la première opération d'enduction, alors que les bossages 11 portent les fils 4 déjà revêtus sur une face pour effectuer la seconde opération d'enduction sur l'autre de leurs faces.

Parmi les propriétés spécifiques de cette mise en oeuvre de l'invention, il y a la séparation totale des circuits de fils 4 et de caoutchouc. Il est possible d'arrêter l'enduction de fils 4 par un léger recul du cylindre 1 par rapport au rouleau 2. A cette fin, il suffit de monter le cylindre 1 et le galet 75 sur un cadre mobile par rapport au rouleau 1. Lorsque le cylindre 1 est éloigné du rouleau 2, et que celui-ci est en rotation, le caoutchouc est recyclé en totalité dans la chambre 50. La régulation de pression commandant la vitesse de rotation de la vis 55 permet de maintenir le niveau de pression souhaité. On peut également prélever les bandelettes de caoutchouc 20 par exemple dans la zone inférieure du rouleau 2, et réintroduire les bandelettes dans la boudineuse 51. Ces modes de fonctionnement sont utiles pour assurer une mise en régime thermique de la machine sans gaspillage de matière car il est très difficile de recycler un produit mixte, c'est-à-dire constitué de matières différentes comme des fils 4 et du caoutchouc. Il est également possible de permettre des arrêts momentanés de la machine avec un minimum de perturbations du régime thermique, en maintenant la rotation du rouleau 2, et en écartant le cylindre 1.

Dans ce cas, le mouvement des fils 4 est immédiatement arrêté. Le caoutchouc, qui n'est plus consommé par l'enduction, est immédiatement recyclé dans la chambre 50. La machine est prête à redémarrer à tout moment par simple rapprochement du cylindre 1.

Dans les deux autres variantes de réalisation (figures 5 à 9), les fils et le rouleau sont maintenus en coopération avec interposition du caoutchouc d'enduction, sur un arc proche de 90°, au moins pour l'enduction de la première face.

On aperçoit également un cylindre 1 entraînant un ensemble de fils 4 déroulés en parallèle. Les fils 4 sont partiellement enroulés autour du cylindre 1, creusé à cette fin de petites stries 100. On aperçoit également un rouleau 2 qui va coopérer avec le cylindre pour réaliser l'enduction d'une première face, puis l'enduction de la seconde face à une position axialement décalée par rapport à la première. Dans ces mises en oeuvre, le caoutchouc d'enduction est délivré sous forme de bandelette au travers d'une fente 52 dont la longueur correspond sensiblement à la largeur de l'ensemble de fils, ladite fente 52 étant positionnée entre le cylindre 1 et le rouleau 2 à un endroit compris entre le plan comprenant les deux axes de rotation A1, A2 et le plan tangent au cylindre 1 et au rouleau 2 du côté amont par rapport au sens de rotation du cylindre 1 et rouleau 2.

Le caoutchouc 5, dont la composition n'est pas concernée par la présente invention, pas plus que la nature des fils 4, est délivré à l'endroit où l'on en a besoin, et exactement selon la quantité dont on a besoin. Mais, au contraire de l'exemple précédent, il n'y a pas de mise en feuille préalable de la matière d'enduction par l'action du rouleau. Celle-ci est délivrée directement sous forme de bandelette 20 dans la cavité subsistant entre cylindre 1 et rouleau 2, juste avant la zone d'écartement minimal. Dès sa sortie du dispositif d'extrusion 51, la matière 5 d'enduction est happée dans l'interstice 12 subsistant entre cylindre 1 et rouleau 2 et réalise l'imprégnation, des fils 4. L'orifice d'extrusion en forme de fente 52 est situé en amont du plan théorique joignant les axes de rotation A1 et A2 des cylindre 1 et rouleau 2 (en arrière par référence au sens de rotation des rouleaux), mais en aval du plan théorique tangent à la fois au cylindre et au rouleau du côté gauche sur la figure 5.

A titre d'exemple, l'extrusion est assurée par une boudineuse 51 dont le corps comporte une vis hélicoïdale (non représenté sur les schémas). Tout dispositif permettant de fournir un débit de matière peut convenir. En tête de boudineuse 51, on trouve une chambre permettant de faire varier progressivement la section de passage de la forme circulaire à une forme très applatie, puis on trouve l'orifice d'extrusion en forme de fente. Au besoin, par exemple pour les grandes largeurs de nappe, on peut disposer en parallèle plusieurs boudineuses.

De préférence, on prévoit une régulation en boucle fermée pour garantir la régularité des dimensions du produit. Les caméras 61 et 62 mesurent respectivement l'épaisseur et la largeur du produit obtenu après l'enduction par la matière d'imprégnation. Sur la base de ces mesures, on peut agir sur la taille de l'interstice 12 en déplaçant le cylindre 1 par rapport au rouleau 2. On peut également agir sur la consigne de pression de la matière d'imprégnation à l'intérieur de la boudineuse. Celle-ci est contrôlée par la sonde de pression 63 et on agit sur cette pression en contrôlant la vitesse de la vis hélicoïdale.

Pour assurer l'enduction sur la seconde face, selon le procédé de l'invention, on déplace l'ensemble de fils, revêtus sur une face, axialement par rapport à la première position d'enduction.

Aux figures 5 à 7, on a illustré une première méthode de guidage de l'ensemble de fils 4. Elle consiste à repositionner les fils 4 sur le rouleau 2. Donc, en raisonnant par rapport au plan médian fictif séparant le rouleau 2 et le cylindre 1, plan dans lequel le caoutchouc d'enduction est délivré, aussi bien pour revêtir la première face que la seconde, cela consiste à introduire les fils 4 dans l'interstice 12 entre rouleau 2 et cylindre 1 par l'autre côté dudit plan médian par rapport au côté d'introduction pour la première imprégnation. Ainsi, on va pouvoir enduire la seconde face sans avoir à retourner la bandelette sur elle-même.

Aux figures 8 et 9 par contre, on réintroduit les fils 4 pour leur second passage par le même côté dudit plan médian que lors de la première enduction, ce qui impose de retourner l'ensemble de fils 4 sur lui-même.

Revenant aux figures 5 à 7, on voit que l'appareil comporte deux galets 71, 72 disposés au voisinage dudit rouleau 2, écartés légèrement de celui-ci du côté opposé par rapport audit cylindre 1. Lesdits galets 71, 72 amènent l'ensemble des fils 4 en contact avec le rouleau 2 axialement à côté de la zone de première enduction, avant de les faire passer une seconde fois dans l'interstice 12 entre cylindre 1 et rouleau 2, pour une enduction de la seconde face par une extrudeuse délivrant du caoutchouc au travers d'une seconde fente disposée axialement en correspondance avec la zone de second passage des fils, et entre rouleau 2 et cylindre 1 de façon similaire à la première fente. Il peut s'agir d'une seule extrudeuse 51 extrudant un travers de deux fentes 52, ou bien chaque fente 52 peut avoir sa propre extrudeuse 51.

La figure 6 montre la réalisation la plus simple, où le rouleau 2 est monobloc, alors que à la figure 7, le rouleau 2 est en réalité divisé en deux parties : une première partie 2A correspond à l'enduction de la première face, alors que la seconde partie 2B correspond à l'enduction de la seconde face, ce qui permet de régler séparément les interstices entre rouleau et cylindre, pour chacun des deux stades de l'enduction.

Pour la seconde méthode de guidage des fils, l'appareil comporte un galet 75 disposé au voisinage dudit rouleau 2 et un galet 77 disposé au voisinage dudit cylindre 1, ledit ensemble de fils 4 étant retourné sur lui-même entre lesdits galets 76 et 77. Lesdits galets 75, 77 amènent l'ensemble de fils 4 en contact avec le cylindre 1 axialement à côté de la face de première enduction, avant de les faire passer une seconde fois dans l'interstice entre cylindre 1 et rouleau 2, pour une enduction de la seconde face par une extrudeuse délivrant le caoutchouc au travers d'une seconde fente disposée axialement en correspondance avec la zone de second passage des fils, et entre rouleau et cylindre de façon similaire à la première fente.

Le dispositif assurant le guidage des fils comporte un troisième galet 76 dont le rôle est simplement de laisser un espace suffisant pour implanter les caméras 61 et 62 intervenant dans la régulation de la machine.

On aperçoit à la figure 9 que l'enduction de la première face est effectuée au moyen d'une première boudineuse 51A, alors que l'enduction de la seconde face est effectuée via une seconde boudineuse 51B. Cela permet d'utiliser éventuellement des mélanges de caoutchouc différents. Cette possibilité pourrait aussi être combinée avec les autres variantes de réalisation.

On voit donc que l'invention se prête très bien à différentes adaptations, et à différents types de produits semi-finis à fabriquer. Elle répond donc au besoin actuel de disposer d'outils souples, jouissant de bonnes performances industrielles.

## Revendications

1. Procédé d'enduction par du caoutchouc d'un ensemble de fils (4) déroulés simultanément et en parallèle, dans lequel l'enduction sur la première face dudit ensemble (4) est effectuée en appuyant ledit ensemble de fils (4) sur un rouleau (2) en rotation, avec interposition de caoutchouc, caractérisé en ce que l'on guide ensuite ledit ensemble (4) pour le déplacer axialement par rapport à la position d'enduction de la première face et on l'amène an appui sur le même rouleau (2), pour un second passage permettant d'enduire la seconde face.

2. Procédé d'enduction selon la revendication 1, caractérisé en ce que pendant le déplacement axialement par rapport à la position d'enduction de la première face, l'ensemble de fils (4) est retourné sur lui-même pour changer de face en contact avec ledit rouleau (2).

3. Appareil d'enduction d'un ensemble de fils (4), comportant un cylindre (1) autour duquel sont enroulés partiellement lesdits fils (4), ledit cylindre (1) coopérant avec un rouleau (2) pour imprégner lesdits fils (4) avec du caoutchouc interposé entre le rouleau (2) et les fils (4), ledit rouleau (2) étant en rotation inverse par rapport audit cylindre (1), caractérisé en ce qu'il comporte au moins un galet (71,72) disposé et orienté pour assurer la reprise de l'ensemble de fils (4) enduits sur une face, le déplacement de ceux-ci axialement par rapport à la position d'enduction de la première face sur le rouleau (2), et le guidage de ceux-ci pour les amener une seconde fois en coopération avec ledit rouleau (2), pour une enduction de la seconde face effectuée axialement à côté de la position d'enduction de la première face.

4. Appareil selon le revendication 3, caractérisé en ce que le caoutchouc d'enduction est délivrée par une extrudeuse, au travers d'au moins une fente (52) dont la longueur correspond à la largeur de l'ensemble de fils (4), ladite fente (52) étant positionnée entre le cylindre (1) et le rouleau (2) à un endroit compris entre le plan comprenant les deux axes de rotation (A1,A2) et le plan tangent au cylindre (1) et au rouleau (2) du côté amont par rapport au sens d'avancement des fils (4).

5. Appareil selon la revendication 4, caractérisé en ce qu'il comporte deux galets (71,72) disposés au voisinage dudit rouleau (2), écartés légèrement de celui-ci du côté opposé par rapport audit cylindre (1), et en ce que lesdits galets (71,72) amènent l'ensemble des fils (4) en contact avec le rouleau (2) axialement à côté de la zone de première enduction, avant de les faire passer une seconde fois dans l'interstice (12) ntre cylindre (1) et rouleau (2), pour une enduction de la seconde face par une extrudeuse (51) délivrant du caoutchouc au travers d'une seconde fente (52) disposée axialement en correspondance avec la zone de second passage des fils (4), et entre rouleau (2) et cylindre (1) de façon similaire à la première fente (52).

6. Appareil selon la revendication 4, caractérisé en ce qu'il comporte au moins un galet (75,76,77) disposé au voisinage dudit rouleau (2) et un galet disposé au voisinage dudit cylindre (1), ledit ensemble de fils (4) étant retourné sur lui-même entre lesdits galets (75,76,77), et en ce que lesdits galets (75,76,77) amènent l'ensemble de fils (4) en contact avec le cylindre (1) axialement à côté de la fae de première enduction, avant de les faire passer une seconde fois dans l'interstice (12) entre cylindre (1) et rouleau (2) pour une enduction de la seconde face par une extrudeuse (51) délivrant le caoutchouc au travers d'une seconde fente (52) disposée axialement en correspondance avec la zone de second passage des fils (4), et enter rouleau (2) et cylindre (1) de façon similaire à la première fente (52).

7. Appareil selon le revendication 3, caractérisé en ce que le caoutchouc est disposé en bandelettes sur ledit rouleau (2), et en ce que ledit galet (71,72) est positionné sensiblement dans le prolongement radial de la position du cylindre (1), et en ce que après passage autour du cylindre (1) pour assembler une bandelette (20) à un ensemble de fils (4), l'ensemble de fils (4) rejoint le galet (71,72), puis revient sur ledit cylindre (1), de face revêtue de la matière d'enduction étant en contact avec ledit cylindre (1).

8. Appareil selon la revendication 7, caractérisé en ce que ledit rouleau (2) comporte des gorges (21) correspondant chacune à une bandelette (20), et en ce que celles-ci sont obtenues grâce à un second rouleau (3) comportant des bossages (10) correspondant auxdites gorges (21), le second rouleau (3) étant disposé parallèlement au premier de façon à laisser entre ceux-ci un intervalle (e) correspondant à l'épaisseur desdites bandelettes (20), les rouleaux (2,3) tournant en sens inverses l'un de l'autre, la matière d'imprégnation étant accumulée entre lesdits rouleaux (2,3) du côté amont par rapport au sens de rotation des rouleaux (2,3).

## Patentansprüche

1. Verfahren zum Beschichten mit Kautschuk einer Anordnung von gleichzeitig abgewickelter und parallel verlaufender Fäden (4), bei dem die Beschichtung auf der ersten Seite der Anordnung (4) erzeugt wird durch Andrücken der Fadenanordnung (4) auf eine sich drehende Rolle (2), mit Zwischensetzen von Kautschuk, dadurch gekennzeichnet, daß sodann die Anordnung (4) geführt wird, um sie axial bezüglich der Beschichtungsstellung der ersten Seite zu bewegen, und sie in Andruck auf dieselbe Rolle (2) für ein zweites Vorbeibewegen gebracht wird, das die Beschichtung der zweiten Seite ermöglicht.

2. Beschichtungsverfahren nach Anspruch 1, dadurch gekennzeichnet, daß während der Axialbewegung bezüglich der Beschichtungsposition der ersten Seite die Fadenanordnung (4) auf sich selbst umgeschlagen wird, um die Berührungsseite mit der Rolle (2) zu ändern.

3. Vorrichtung zum Beschichten einer Fadenanordnung (4) mit einem Zylinder 1, um den teilweise die Fäden (4) gerollt werden, wobei der Zylinder mit einer Rolle (2) zusammenwirkt, um die Fäden (4) mit Kautschuk zu imprägnieren, der zwischen der Rolle (2) und den Fäden (4) gebracht wird, wobei die Rolle (2) sich in umgekehrter Drehrichtung bezüglich des Zylinders (1) befindet, dadurch gekennzeichnet, daß sie wenigstens eine Walze (71,72) aufweist, die so angeordnet und ausgerichtet ist, daß sie die Wiederaufnahme der auf einer Seite beschichteten Fadenanordnung (4), die bezüglich der Beschichtungsstelle der ersten Seite axiale Bewegung von dieser Anordnung auf der Rolle (2), und deren Führung sicherstellt, um sie ein zweites Mal in Zusammenarbeit mit der Walze (2) für eine Beschichtung der zweiten Seite zu bringen, die axial neben der Beschichtungsstelle der ersten Seite erzeugt wird.

4. Vorrichtung nach Anspruch 3, dadurch gekennzeichnet, daß der Beschichtungskautschuk durch einen Extruder geliefert wird über wenigstens einen Spalt (52), dessen Länge der Breite der Fadenanordnung (4) entspricht, wobei der Spalt (52) zwischen dem Zylinder (1) und der Rolle (2) an einem Ort positioniert ist, der zwischen der Ebene, die die beiden Drehachsen (A1, A2) aufweist, und der zu dem Zylinder (1) und der Rolle (2) tangentialen Ebene auf der stromaufwärtigen Seite bezüglich der Vorwärtsbewegungsrichtung der Fäden (4) liegt.

5. Vorrichtung nach Anspruch 4, dadurch gekennzeichnet, daß sie zwei Walzen (71,72) aufweist, die in der Nähe der Rolle (2) angeordnet sind, wobei sie leicht von dieser auf der Seite bezüglich des Zylinders (1) gegenüberliegend angeordnet sind, und daß die Walzen (71,72) die Anordnung der Fäden (4) axial in Berührung mit der Rolle (2) auf der Seite der Zone der ersten Beschichtung bringen, bevor sie ein zweites Mal in dem Zwischenraum (12) zwischen dem Zylinder (1) und der Rolle (2) hindurchgeführt werden für eine Beschichtung der zweiten Seite durch einen Extruder (51), der Kautschuk durch einen Spalt (52) liefert, der axial entsprechend der Zone der zweiten Passage der Fäden (4) und zwischen der Rolle (2) und dem Zylinder (1) auf gleiche Weise wie der erste Spalt (52) angeordnet ist.

6. Vorrichtung nach Anspruch 4, dadurch gekennzeichnet, daß sie wenigstens eine Walze (75,76,77) aufweist, die in der Nähe der Rolle (2) angeordnet ist, und eine Walze aufweist, die in der Nähe des Zylinders (1) angeordnet ist, wobei die Fadenanordnung (4) auf sich selbst zurückgeführt wird zwischen den Walzen (75,76,77), und daß die Walzen (75,76,77) die Fadenanordnung (4) axial in Berührung mit dem Zylinder (1) auf der Seite der ersten Beschichtung bringen, bevor sie diese ein zweites Mal in den Zwischenraum (12) zwischen dem Zylinder (1) und der Rolle (2) für eine Beschichtung der zweiten Seite durch einen Extruder (51) bringen, der den Kautschuk über einen zweiten Spalt (52) liefert, der axial entsprechend mit der Zone der zweiten Passage der Fäden (4) und zwischen der Rolle (2) und dem Zylinder (1) auf gleiche Weise wie der erste Spalt (52) angeordnet ist.

7. Vorrichtung nach Anspruch 3, dadurch gekennzeichnet, daß der Kautschuk in Streifen auf der Rolle (2) angeordnet wird und daß die Walze (71,72) im wesentlichen in der radialen Verlängerung der Stellung des Zylinders (1) angeordnet ist, und daß nach Vorbeibewegen um den Zylinder (1), um einen Streifen (20) auf eine Fadenanordnung (4) anzubringen, die Anordnung der Fäden (4) zur Walze (71,72) und sodann auf den Zylinder (1) zurückkommt, wobei die von dem Beschichtungsmaterial überdeckte Seite in Berügrung ist mit dem Zylinder (1).

8. Vorrichtung nach Anspruch 7, dadurch gekennzeichnet, daß die Rolle (2) Kerben (21) aufweist, wobei jede einem Streifen (20) entspricht und daß jene dank einer zweiten Rolle (3) erhalten werden, die Buckel (10) entsprechend den Kerben (21) aufweist, wobei die zweite Rolle (3) parallel zur ersten derart angeordnet ist, daß sie zwischen diesen ein Intervall (e) freiläßt entsprechend der Dicke der Streifen (20), wobei die Rollen (2,3) sich in umgekehrte Richtung zueinander drehen, wobei das Imprägniermaterial zwischen den Rollen (2,3) stromauf bezüglich der Drehrichtung der Rollen (2,3) gesammelt wird.

**Claims**

1. Process of rubbercoating a unit of cords (4) unwound simultaneously and in parallel, in which the coating on the first face of said unit (4) is performed by resting said unit of cords (4) on a roller (2) in rotation, with insertion of rubber, characterized in that said unit (4) is then guided to move it axially relative to the coating position of the first face and it is brought to rest on the same roller (2) for a second pass making it possible to coat the second face.

2. Coating process according to claim 1, wherein during the axial movement relative to the coating position, of the first face, the unit of cords (4) is turned over to change the face in contact with said roller (2).

3. Device for coating a unit of cords (4), comprising a cylinder (1) around which said cords (4) are partially wound, said cylinder (1) working with a roller (2) to impregnate said cords (4) with rubber placed between the roller (2) and the cords (4), said roller (2) being put in opposite rotation relative to said cylinder (1), wherein it comprises at least one roller (71, 72) placed and directed to assure the pickup of the unit of cords (4) coated on one face, the movement of the cords axially relative to the coating position of the first face on the roller (2), and guiding them to bring them a second time, in cooperation with said roller (2), for a coating of the second face being performed axially beside the coating position of the first face.

4. Device according to claim 3, wherein the coating rubber is delivered by an extruder through at least one slot (52) whose length corresponds to the width of the unit of cords (4), said slot (52) being positioned between the cylinder (1) and roller (2) at a spot between the plane comprising the two axes of rotation (A1, A2) and the plane tangent to the cylinder (1) and to the roller (2) on the side upstream relative to the direction of advance of the cords (4).

5. Device according to claim 4, wherein it comprises two rollers (71, 72) placed close to said roller (2), slightly moved away from the latter on the side opposite said cylinder (1), and in that said rollers (71, 72) bring the unit of cords (4) in contact with the roller (2) axially beside the first coating zone, before making them pass a second time in the gap (12) between the cylinder (1) and roller (2), for a coating of the second face by an extruder (51) delivering rubber through a second slot (52) placed axially corresponding to the second pass zone of the cords (4), and between roller (2) and cylinder (1) in a way similar to the first slot (52).

6. Device according to claim 4, wherein it comprises at least a roller (75, 76, 77) placed close to said roller (2) and a roller placed close to said cylinder (1), said unit of cords (4) being turned over between said rollers (75, 76, 77), and wherein said rollers (75, 76, 77) bring the unit of cords (4) in contact with the cylinder (1) axially beside the first coating face, before making them pass a second time in the gap (12) between the cylinder (1) and the roller (2), for coating the second face by an extruder (51) delivering rubber through a second slot (52) placed axially corresponding to the second pass zone of the cords (4), and between roller (2) and cylinder (1) in a way similar to the first slot (52).

7. Device according to claim 3, wherein the rubber is placed in strips on said roller (2), and wherein said roller (71, 72) is positioned approximately in the radial extension of the position of the cylinder (1), and wherein, after passage around the cylinder (1) to assemble a strip (20) with a unit of cords (4), the unit of cords (4) joins the roller (71, 72) then comes back on said cylinder (1), the face coated with the coating material being in contact with said cylinder (1).

8. Device according to claim 7, wherein said roller (2) comprises grooves (21) each corresponding to a strip (20), and wherein they are obtained thanks to a second roller (3) comprising bosses (10) corresponding to said grooves (21), the second roller (3) being placed parallel to the first to leave a gap (e) between them corresponding to the thickness of said strips (20), the rollers (2, 3) turning in opposite directions, the impregnation material being accumulated between said rollers (2, 3) on the side upstream relative to the direction of rotation of the rollers (2, 3).

Fig.1

EP 0 366 773 B1

**Fig. 4**

**Fig. 3**

**Fig. 2**

fig. 5

fig. 7

fig. 6

fig. 8

fig. 9